# EUROPÄISCHE PATENTSCHRIFT

(11) **EP 1 632 651 B1**
(45) Veröffentlichungstag und Bekanntmachung des Hinweises auf die Patenterteilung: **20.12.2006**
(21) Anmeldenummer: 04020834.0
(22) Anmeldetag: 02.09.2004
(51) Int. Cl.: F01K 17/02, F02C 6/18, F02G 5/00

(54) **Temporäre Steigerung durch KWK erzeugter elektrischer Energie**
Temporary increase of electrical power production from a power-heat cogeneration system
Augmentation temporaire d'énergie électrique produite par un système de production combinée d'énergie thermique et d'électricité

(43) Veröffentlichungstag der Anmeldung: 08.03.2006
(73) Patentinhaber: SWE Strom und Fernwärme GmbH, 99086 Erfurt (DE)
(72) Erfinder: Bergmann, Robert, 99428 Gaberndorf (DE)
(74) Vertreter: Liedtke, Klaus

(56) Entgegenhaltungen:
- DE-B3- 10 261 171
- US-A1- 2004 098 169
- WITZANI M ET AL: "MODELLING OF COGENERATION POWER PLANTS ON TIME-DEPENDENT POWER DEMANDS OF THE CONSUMER MODELLABBILDUNG VON CO-GENERATION-KRAFTWERKEN AUF DER BASIS ZEITABHAENGIGER ENERGIENACHFRAGEN DURCH DEN KONSUMENTEN" VGB POWERTECH, VGB KRAFTWERSTECHNIK GMBH, ESSEN, DE, Bd. 81, Nr. 12, Dezember 2001 (2001-12), Seiten 74-79, XP001112388 ISSN: 1435-3199

## Beschreibung

Die Erfindung betrifft eine Verfahren zur Steigerung von durch Energieerzeuger durch Kraft-Wärme-Kopplung erzeugter elektrischer Energie in einer bestimmten Zeitspanne Δₜ.

Die Erfindung wird vorzugsweise durch Energieerzeuger, welche sowohl Wärme in Fernwärmenetze als auch elektrischen Strom in Stromnetze einspeisen, sowie von Blockheizkraftwerks- und Industriekraftwerksbetreibern angewendet.

Im Stand der Technik sind verschiedene Verfahren zur Steigerung von durch Energieerzeuger durch Kraft-Wärme-Kopplung erzeugter elektrischer Energie in einer bestimmten Zeitspanne Δₜ bekannt.

Inhalt derartiger bekannter Verfahren ist regelmäßig die Erhöhung des Verstromungsfaktors, auch Koppelfaktor genannt, verwendeter Maschinen zur Kraft-Wärme-Kopplung.

Dokument DE 10261171 offenbart einen Verbund von Kraft-Wärme-Kopplungsanlagen.

Üblicherweise ist der zeitliche Verlauf des Bedarfes an elektrischer Energie über einen Tag oder über bestimmte künftige Zeitspannen auf Grundlage bekannter vergangener Verläufe für Betreiber von KWK etwa vorhersagbar. Bei Spitzenbelastung des Stromnetzes reichen häufig die Kapazitäten regionaler KWK-Betreiber nicht aus, so dass bei Überschreitung eines Maximalwertes an elektrischer Leistung, die dieser Anbieter selbst erzeugen kann, ein zeitlich begrenzter Zukauf von elektrischem Strom von anderen Anbietern, so genannter Fremdstrom, erforderlich wird.
Der zeitliche Verlauf der Abnahme von Fernwärme hingegen ist, insbesondere bei einer geringen Anzahl von Abnehmern für bestimmte Zeitspannen, kaum vorhersagbar. Der Energieerzeuger hält stets Fernwärme mit einer bestimmten Temperatur vor; die Abnehmer von Fernwärme steuern zur Entnahme von Fernwärme den Volumenstrom der Fernwärme in mehr oder weniger kurzen Intervallen. Die Entnahme von Fernwärme durch einzelne Abnehmer dient dabei regelmäßig nicht zur zu Heizzwecken, sondern insbesondere in den Sommermonaten zur Erzeugung von Kälte im Absorbtionsverfahren oder im Adsorbtionsverfahren.

Die vom Energieerzeuger hergestellte elektrische Energie ist dabei proportional zu der vom Energieerzeuger hergestellten Fernwärme. Eine zeitweise hohe Entnahme von Fernwärme durch Wärmeverbraucher aus dem Fernwärmenetz, welches der Energieerzeuger speist, hat deshalb zwangsläufig eine Erhöhung der Produktion von elektrischem Strom zur Folge. Für Energieerzeuger wäre es deshalb vorteilhaft, wenn während der Zeitspanne des maximalen Verbrauches an elektrischem Strom ebenfalls ein Maximalverbrauch an Fernwärme durch die Wärmeverbraucher anstünde.

Der Erfindung liegt die Aufgabe zugrunde, ein Verfahren zur Steigerung von durch Energieerzeuger durch Kraft-Wärme-Kupplung erzeugter elektrischer Energie in einer bestimmten Zeitspanne Δₜ zu geben, mit dem es gelingt, den Zukauf von Fremdstrom anderer Anbieter zu reduzieren, falls die Spitzenbelastung an elektrischer Leistung durch die elektrische Eigenleistung des Energieerzeugers nicht gedeckt werden kann.

Erfindungsgemäß wird die Aufgabe mit der in Anspruch 1 angegebenen Merkmalskombination gelöst.

Vorteilhafte Ausgestaltungen sind in den Unteransprüchen angegeben.

Die Erfindung weist eine Reihe von Vorteilen auf. Durch ein Verfahren zur Steigerung von durch Energieerzeuger durch Kraft-Wärme-Kopplung erzeugter elektrischer Energie in einer bestimmten Zeitspanne Δₜ, bei dem wenigstens ein Wärmeverbraucher mit zeitlich variablem Wärmeverbrauch, der an einen Wärmekreislauf eines Wärmeerzeugers angeschlossen ist, von dem Energieerzeuger zu einem bestimmten Zeitpunkt t₂ ein Steuersignal zur Wärmeverbrauchserhöhung über eine Datenübertragungseinrichtung erhält und bei dem anschließend der Wärmeverbrauch des wenigstens einen Wärmeverbrauchers unabhängig von dessen zu diesem Zeitpunkt tatsächlichem Wärmebedarf für die bestimmte Zeitspanne Δₜ erhöht wird, gelingt es, für diese bestimmte Zeitspanne Δₜ den Wärmeverbrauch des Fernwärmenetzes zu maximieren und dadurch die Produktion von elektrischer Energie ebenfalls zu erhöhen, so dass in der Folge der Zukauf von Fremdstrom in Spitzenzeiten durch den Energieerzeuger reduziert werden kann. Indem somit Abnehmern von Fernwärme in einer bestimmten Zeitspanne die Abnahme eines maximal möglichen Volumenstromes des Wärmeträgers vorgegeben wird, können die Aufwendungen des Energieerzeugers, die dieser zum Zukauf von Fremdenergie vorhalten muss, deutlich reduziert werden. Eine auf diese Art und Weise dem Abnehmer der Fernwärme vorgegebene Abnahme einer maximalen Wärmemenge innerhalb einer kurzen Zeitspanne ist für eine Vielzahl von Abnehmern von Fernwärme subjektiv kaum zu verzeichnen. Insbesondere bei Nutzung der Fernwärme zu Zwecken des Heizens ist bei einer vorgegebenen Maximalleistung und Fernwärme in einer Zeitspanne von ca. 30 Minuten aufgrund der Trägheit der Temperaturentwicklung in Gebäuden kaum zu bemerken. Auch bei der Nutzung von Fernwärme zur Herstellung von Kälte im Absorbtions- oder Adsorbtionsverfahren ist aufgrund der Trägheit der Absorber bzw. Adsorber sowie aufgrund der Temperaturträgheit der zu kühlenden Gebäude eine vorgegebene erhöhte Wärmeentnahme kaum zu bemerken.

Eine Ausgestaltung sieht vor, dass das Steuersignal zur Wärmeverbrauchserhöhung des Wärmeverbrauchers für die Zeitspanne Δt vom Energieerzeuger zu einem bestimmten Zeitpunkt t₂ vor einem erwarteten Spitzenbedarf an elektrischem Strom gegeben wird, wobei die Zeitspanne Δt zu einem Zeitpunkt nach Erreichen des Spitzenbedarfes an elektrischen Strom endet; vorteilhaft ist dabei, dass es gelingt, die elektrische Leistung des Energieerzeugers innerhalb einer Zeitspanne zu erhöhen, deren Beginn vor einem prognostizierten Spitzenbedarf an elektrischer Leistung beginnt und nach dessen Überschreiten endet, so dass eine besonders effektive Reduzierung des Bezuges von Fremdstrom ermöglicht wird.

Eine weitere Ausgestaltung sieht vor, dass der Wärmeverbraucher zunächst von dem Energieerzeuger über eine Datenübertragungseinrichtung zu einem Zeitpunkt t₁ ein Steuersignal zur Wärmeverbrauchsreduzierung erhält, dass anschließend der Wärmeverbrauch des Wärmeverbrauchers unabhängig von dessen zu diesem Zeitpunkt tatsächlichem Wärmebedarf für eine bestimmte Zeit reduziert wird und dass anschließend der Wärmeverbrauch des Wärmeverbrauchers für eine bestimmte Zeitspanne Δₜ erhöht wird. Vorteilhaft ist dabei, dass durch die vorgegebene, künstliche Verknappung des Wärmebezuges vor einer gleichfalls vorgegebenen Erhöhung des Wärmebezuges eine bestimmte Knappheit an Fernwärme beim Verbraucher erzeugt wird, so dass in den ersten Minuten der folgenden vorgegebenen Verbrauchsmaximierung zunächst eine Kompensation des Wärmedefizits beim Abnehmer erfolgt. Insbesondere ist dabei vorteilhaft, dass durch die vorgegebene Verknappung an Wärmeverbrauch die Zeitspanne Δₜ zur maximierten Wärmeabnahme verlängert werden kann, ohne dass dies vom Abnehmer als unangenehm registriert wird.

Eine weitere Ausgestaltung sieht vor, dass die bestimmte Zeitspanne Δₜ erhöhter Wärmeentnahme höchstens zwei Stunden beträgt. Dabei ist vorteilhaft, dass bei einer Länge von maximal zwei Stunden der Spitzenwert des prognostizierten Verbrauchs an elektrischer Energie mit an Sicherheit grenzender Wahrscheinlichkeit in dem Intervall Δₜ liegt.

Eine weitere Ausgestaltung sieht vor, dass innerhalb der Zeitspanne Δₜ der Wärmeverbraucher eine maximal mögliche Wärmemenge entnimmt; vorteilhaft ist dabei, dass eine Maximierung der Erzeugung an Eigenenergie innerhalb dieser Zeitspanne ermöglicht wird.

Eine weitere Ausgestaltung sieht vor, dass der Zeitpunkt t₂ maximal 30 Minuten vor dem erwarteten Spitzenbedarf an elektrischem Strom liegt; vorteilhaft ist dabei, dass die Zeitspanne, in der der Wärmeverbraucher einen erhöhten Wärmestrom abnimmt, so kurz ist, dass auch bei Wärmeverbrauchern mit kleinen Gebäuden die thermische Trägheit dieser Gebäude immer noch so groß ist, dass Personen in Gebäuden der Wärmeverbraucher eine Temperaturänderung subjektiv kaum wahrnehmen.

Die Erfindung wird im folgenden anhand eines Ausführungsbeispieles näher erläutert.

Dazu zeigen
- Figur 1: eine schematische Darstellung einer Ausführungsform des erfindungsgemäßen Verfahrens,
- Figur 2: einen zeitlichen Verlauf des Gesamtbedarfes an elektrischer Leistung Pₑₗ(t) eines zu versorgenden Stromnetzes,
- Figur 3: den zeitlichen Verlauf des Bedarfes an Wärmeleistung P_{w}(t) zweier verschiedener Wärmeverbraucher ohne Fremdeingriff,
- und:
- Figur 4: den zeitlichen Verlauf des Bedarfes an Wärmeleistung P_{w}(t) eines Wärmeverbrauchers mit Fremdeingriff.

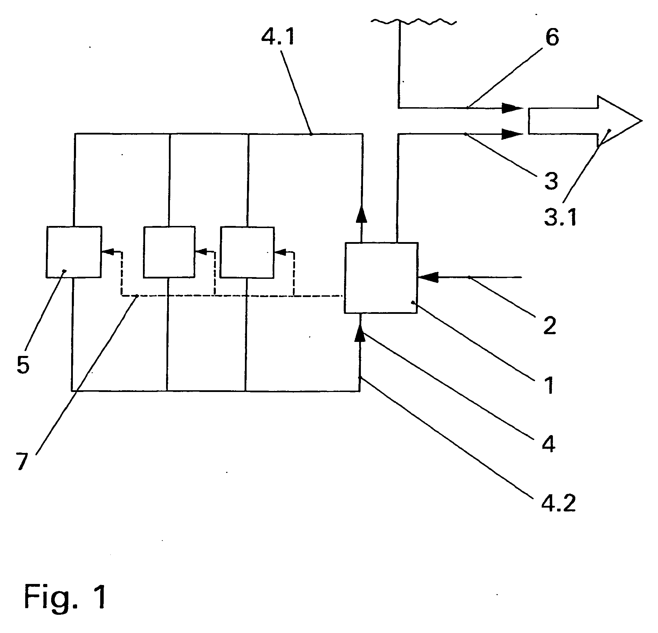

Die in Figur 1 gezeigte schematische Darstellung zeigt einen Energieerzeuger 1, der durch Kraft-Wärme-Kopplung (KWK) elektrischen Strom 3 sowie Wärme erzeugt, die einem geschlossenen Wärmekreislauf 4 zugeführt wird. Dazu wird dem Energieerzeuger 1 Erdgas als Energieträger 2 zugeführt. Der vom Energieerzeuger 1 produzierte elektrische Strom 3 wird in ein Stromnetz 3.1 eingespeist. Bei dem Wärmekreislauf 4 handelt es sich um einen geschlossenen Kreislauf mit einem Vorlauf 4.1, mit welchem drei Wärmeverbraucher 5 mit Fernwärme versorgt werden, sowie einem Rücklauf 4.2. Für die vom Wärmeerzeuger 1 in Kraft-Wärme-Kopplung erzeugte Energie ist die Größe des elektrischen Stromes 3 etwa proportional zur erzeugten Wärme. Die Wärmeverbraucher 5 entnehmen dem Wärmekreislauf 4 Wärme in der Menge, in der ein Wärmebezug aktuell jeweils vom betreffenden Wärmeverbraucher 5 für erforderlich gehalten wird. Dazu wird von jedem Wärmeverbraucher 5 bei hohem Wärmebedarf der Volumenstrom des Wärmeträgers vergrößert und bei kleiner werdendem Wärmebedarf wird der Volumenstrom des Wärmeträgers verkleinert. Die Wärmeverbraucher 5 steuern ihre Abnahme an Fernwärme dabei häufig relativ unsensibel, d.h. das der Volumenstrom des die Wärme transportierenden Mediums entweder annähernd so groß wie möglich oder annähernd null bzw. stark schwankend ist. Durch eine Datenübertragungseinrichtung 7, an die der Energieerzeuger 1 sowie die drei Wärmeverbraucher 5 angeschlossen sind, erhalten alle drei Wärmeverbraucher etwa zur gleichen Zeit, nämlich zum Zeitpunkt t₂, ein Steuersignal, infolge dessen die Wärmeverbraucher 5 für eine bestimmte Zeitspanne Δₜ ihre Wärmeabnahme dadurch vergrößern, dass Steuerungsventile zur Steuerung des Volumenstromes des Wärmeträgers jeweils geöffnet werden. Die Länge der bestimmten Zeitspanne Δₜ ist entweder vorbestimmt, so dass nach Ablauf der bestimmten Zeitspanne Δₜ alle Wärmeverbraucher 5 ihren Wärmeverbrauch wieder selbstständig bedarfsgerecht regeln oder die bestimmte Zeitspanne Δₜ wird durch Aussendung eines weiteren Steuersignals, das die Wirkung des zum Zeitpunkt t₂ ausgesendeten Steuersignals aufhebt, wieder in den ursprünglichen Zustand versetzt. Für den Fall, dass der vom Energieerzeuger 1 maximal erzeugbare elektrische Strom 3 zur Deckung des Strombedarfes im Netz für eine kurze Zeitspanne eines Spitzenbedarfs nicht ausreicht, muss vom Betreiber des Energieerzeugers 1 Fremdstrom 6 zugekauft und dem betreffenden Stromnetz 3.1 zugeführt werden. Der Zukauf von Fremdstrom 6 durch Betreiber des Energieerzeugers 1 wird häufig in Zeiten von Spitzenbelastungen im Stromnetz 3.1 erforderlich und ist für den Betreiber des Energieerzeugers 1 regelmäßig mit erheblichen Kosten verbunden. Diese durch den zweitweise erforderlich werdenden Zukauf von Fremdstrom 6 entstehenden Kosten werden auf Grundlage des Maximalwertes des Fremdstromes 6 sowie durch das Integral des Fremdstromes 6 über die Zeitspanne seines Bezuges berechnet. Deshalb liegt es regelmäßig im Interesse von Betreibern von Energieerzeugern 1, dass sowohl der Maximalwert des zuzukaufenden Fremdstromes 6 innerhalb einer bestimmten Abrechnungseinheit als auch die Gesamtmenge an zuzukaufender elektrischer Energie innerhalb einer bestimmten Abrechnungszeiteinheit möglichst gering gehalten werden.

Durch die infolge des zum Zeitpunkt t₂ gegebenen Steuersignals erfolgte Erhöhung der Wärmeabnahme durch die Wärmeverbraucher 5 muss nach dem Zeitpunkt t₂ der Energieerzeuger 1 die für den Wärmekreislauf 4 maximal mögliche Wärmestrom erzeugen; die Wärmeproduktion wird dadurch maximiert. Da bei Kraft-Wärme-Kopplung die erzeugte Wärme etwa proportional zur dem erzeugten elektrischen Strom 3 ist, erfolgt durch diese künstliche Erhöhung des Wärmeverbrauchs eine Vergrößerung der Produktion an elektrischen Strom 3. Dadurch wird in Zeitspannen von Spitzenbelastungen im Stromnetz 3.1 der Eigenanteil an elektrischem Strom 3 maximiert, so dass die Größe des zuzukaufenden Fremdstromes 6 so stark wie möglich reduziert wird.

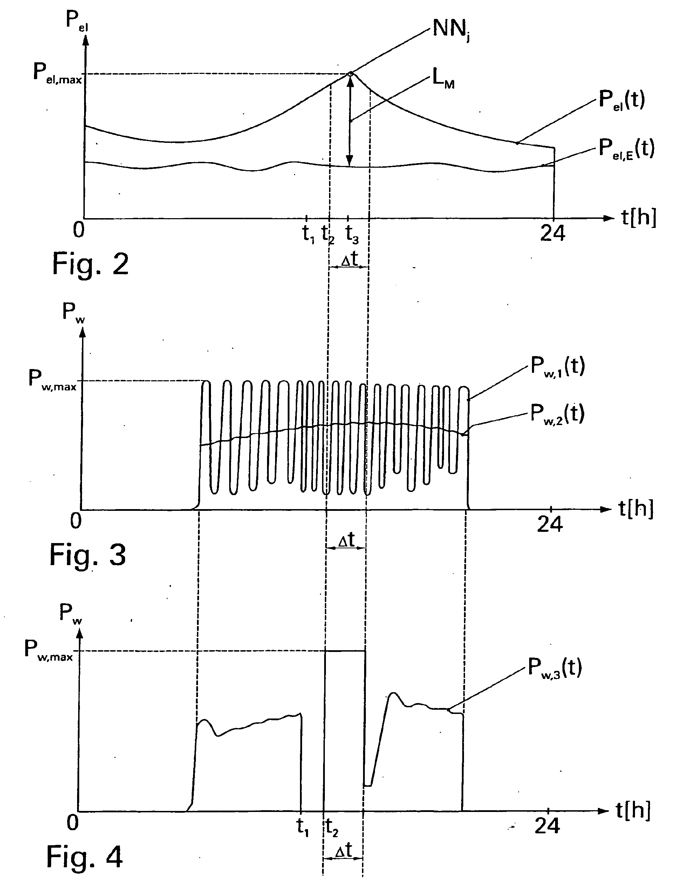

Figur 2 zeigt einen typischen zeitlichen Verlauf der elektrischen Gesamtleistung Pₑₗ(t) eines durch den Energieerzeuger 1 zu versorgenden Stromnetzes 3.1 über eine Zeitspanne von 24 Stunden. In den Morgen- und Abendstunden, besonders im Sommerhalbjahr, ist der Bedarf an elektrischer Energie Pₑₗ relativ niedrig, in der Mittagszeit ist der Bedarf an elektrischer Energie Pₑₗ erhöht, wobei sich der Spitzenbedarf an elektrischer Energie P_{el,max} für diesen Tag zu einem Zeitpunkt t₃ eingestellt hat. Für jeden Zeitpunkt des dargestellten Verlaufes setzt sich der Wert der elektrischen Gesamtleistung Pₑₗ(t) zusammen aus einer von dem Energieerzeuger 1 gelieferten elektrischen Eigenleistungen P_{el,E}(t), dessen Verlauf im Diagramm ebenfalls dargestellt ist, sowie einem zuzukaufenden Wert an elektrischer Fremdleistung. Für die Abrechnung des Fremdbezuges sind neben der innerhalb einer Abrechnungszeiteinheit gelieferten Menge an elektrischer Fremdenergie zwei besonders wichtige Parameter: der Monatshöchstwert der elektrischen Fremdleistung L_{M} sowie der Jahreshöchstwert für elektrische Fremdleistung für die Netznutzung NNⱼ. Zur Reduzierung der Kosten für Betreiber von Energieerzeugern 1 ist es deshalb anstrebenswert, zumindest die Parameter L_{M} und NNⱼ zu reduzieren. Dazu soll innerhalb einer bestimmten Zeitspanne Δₜ, welche zu einem zweiten Zeitpunkt t₂, welcher vom dem Zeitpunkt t₃ liegt, beginnt und nach dem Zeitpunkt t₃ des Spitzenverbrauchs an elektrischen Strom endet; die elektrische Eigenleistung P_{el,E}(t) des Energieerzeugers 1 maximiert werden.

Bei dem in Figur 3 dargestellten Diagramm ist der zeitliche Verlauf des Bedarfs an Wärmeleistung P_{w}(t) von zwei verschiedenen Wärmeverbrauchern 5 ohne Fremdeingriff nach dem Stand der Technik dargestellt, wobei der erste Wärmeverbraucher 5 relativ unsensibel geregelt ist und der zweite Wärmeverbraucher 5 relativ sensibel geregelt ist.
Der erste Wärmeverbraucher 5, dessen Bedarf an Wärmeleistung P_{w,1}(t) sehr stark schwankt, entnimmt innerhalb einer Nutzungszeitspanne, die etwa zwölf Stunden beträgt, in kurzen Abständen jeweils die maximal mögliche Wärmemenge aus dem Wärmekreislauf 4, in dem jeweils ein maximal möglicher Wärmestrom eingestellt wird, und in daran anschließenden ebenfalls relativ kurzen Zeitintervallen nur sehr geringe Mengen von Fernwärme; die Wärmeentnahme dieses ersten Wärmeverbrauchers 1 fällt somit in relativ kurzen Zeitabständen von einem Extrem ins andere Extrem. Für derart unsensible Regelmechanismen lässt sich eine statistisch zuverlässige Aussage darüber nicht treffen, zu welchem in der Zukunft liegenden Zeitpunkt eine hohe Wärmeentnahme zu erwarten ist.
Die Entnahme an Fernwärme durch den zweiten Wärmeverbraucher 5 ist relativ sensibel geregelt; Änderungen in der Entnahme der Wärmemenge aus dem Wärmekreislauf 4 werden dabei sehr behutsam vorgenommen. Dadurch stellt sich ein kontinuierlicher Wärmeleistungsverlauf P_{w,2}(t) ein, der jedoch zu keinem Zeitpunkt höchstmögliche Werte an Wärmeleistungen P_{w} erreicht. Die in diesem Diagramm dargestellte bestimmte Zeitspanne Δₜ, innerhalb derer eine hohe Entnahme von Wärmeleistungen P_{w} durch die beiden Wärmeverbraucher 5 wünschenswert wäre, zeigt, dass der erste Wärmeverbraucher 5 innerhalb dieser bestimmten Zeitspanne Δₜ mehrmals von einem Extrem ins andere Extrem fällt und der zweite Wärmeverbraucher 5 zwar eine kontinuierlich verlaufende, aber keine maximale Wärmeabnahme zeigt.
In jedem Zeitpunkt entspricht die Wärmeabnahme des ersten und des zweiten Wärmeverbrauchers 5 deren tatsächlichem Bedarf.

In Figur 4 ist ein Diagramm des zeitlichen Verlaufs des Wärmeabnahme - nicht des Bedarfs - eines dritten Wärmeverbrauchers 5 an Wärmeleistungen P_{w,3}(t) mit dem erfindungsgemäßen Fremdeingriff durch den Energieerzeuger 1 dargestellt. Die Dauer der Entnahme an Wärmeenergie P_{w} innerhalb des dargestellten Tages beträgt, wie bei den Wärmeverbrauchern 5 in Figur 3, etwa 12 Stunden, wie für Klimakälteanlagen typisch. Zunächst wird die Entnahme an Wärmeleistung P_{w,3}(t) durch den Wärmeverbraucher 5 entsprechend dessen tatsächlichen Bedarfs von diesem dritten Wärmeverbraucher 5 selbst geregelt. Zum Zeitpunkt t₁ jedoch erhält dieser dritte Wärmeverbraucher 5 vom Energieerzeuger 1 ein erstes Steuersignal, infolge dessen die Wärmeentnahme völlig eingestellt wird. Dadurch wird bei dem dritten Wärmeverbraucher 5 unter anderem künstlich eine Wärmeknappheit erzeugt. Zu einem Zeitpunkt t₂, der etwa dreißig Minuten nach dem ersten Zeitpunkt t₁ liegt, erhält der dritte Wärmeverbraucher 5 ein weiteres Steuersignal, infolge dessen der dritte Wärmeverbraucher 5 unabhängig von seinem tatsächlichen Bedarf an Wärmeleistung P_{w} seine Regelungsventile zur Regelung des Volumenstromes im Fernwärmenetz maximal öffnet, so dass der dritte Wärmeverbraucher 5 dem Wärmekreislauf 4 die maximal mögliche Wärmeleistung P_{w,max} entnimmt. Nach Ablauf der bestimmten Zeitspanne Δₜ erhält der Wärmeverbraucher 5 vom Energieerzeuger 1 ein drittes Steuersignal, infolge dessen die durch das zum Zeitpunkt t₂ gesendete zweite Steuerungssignal deaktivierte Regelung zur Wärmeentnahme wieder aktiviert wird. Dadurch übernimmt die Regelung des Wärmeverbrauchers 5 nach Ablauf der bestimmte Zeitspanne Δₜ wieder die eigenständige, unabhängige Regelung der Wärmeentnahme; unmittelbar nach Ablauf der bestimmten Zeitspanne Δₜ ist der Wärmeverbraucher 5 für eine weitere Zeitspanne noch mit Wärmeenergie gesättigt, so dass zunächst nur geringe Werte von Wärmeleistung P_{w} entnommen werden und sich etwa nach einer Stunde ein Wärmentnahmeverhalten einstellt, das sich auch ohne Fremdeingriff einstellen würde. Die Länge der bestimmten Zeitspanne Δₜ beträgt dabei etwa eine Stunde.

### BEZUGSZEICHENLISTE

- 1: Energieerzeuger (KWK)
- 2: Energieträger
- 3: elektrischer Strom
3.1 Stromnetz
- 4: Wärmekreislauf
4.1 Vorlauf
4.2 Rücklauf
- 5: Wärmeverbraucher
- 6: Fremdstrom
- 7: Datenübertragungseinrichtung

- Pₑₗ: elektrische Leistung
- Lₘ: Monatshöchstwert der elektrischen Fremdleistung
- NNⱼ: Jahreshöchstwert f. elektr. Fremdleistung für Netznutzung
- Pₑₗ(t): elektrische Gesamtleistung
- P_{el,E}(t): elektrische Eigenleistung
- P_{w}: Wärmeleistung
- P_{w,i}: Wärmeleistungsverläufe, i = 1, 2, 3
- t: Zeit
- t₁: erster Zeitpunkt
- t₂: zweiter Zeitpunkt
- t₃: Zeitpunkt des Spitzenverbrauches an elektrischem Strom
- Δₜ: bestimmte Zeitspanne

## Patentansprüche

1. Verfahren zur Steigerung von durch Energieerzeuger (1) durch Kraft-Wärme-Kopplung erzeugter elektrischer Energie in einer bestimmten Zeitspanne Δₜ, **dadurch gekennzeichnet,**
**dass** wenigstens ein Wärmeverbraucher (5) mit zeitlich variablem Wärmeverbrauch, der an einen Wärmekreislauf (4) des Energieerzeugers (1) angeschlossen ist, von dem Energieerzeuger (1) zu einem bestimmten Zeitpunkt t₂ ein Steuersignal zur Wärmeverbrauchserhöhung über eine Datenübertragungseinrichtung (7) erhält und
**dass** anschließend der Wärmeverbrauch des wenigstens einen Wärmeverbrauchers (5) unabhängig von dessen zu diesem Zeitpunkt tatsächlichem Wärmebedarf für die bestimmte Zeitspanne Δₜ erhöht wird.

2. Verfahren nach Anspruch 1, **dadurch gekennzeichnet, dass** das Steuersignal zur Wärmeverbrauchserhöhung des Wärmeverbrauchers (5) für die Zeitspanne Δₜ vom Energieerzeuger (1) zu einem bestimmten Zeitpunkt t₂ vor einem erwarteten Spitzenbedarf eines vom Energieerzeuger (1) zu liefernden elektrischen Stromes (3) gegeben wird, wobei die Zeitspanne Δₜ zu einem Zeitpunkt nach Erreichen des Spitzenbedarfes an elektrischem Strom (3) endet.

3. Verfahren nach einem der vorhergehenden Ansprüche, **dadurch gekennzeichnet, dass** die Wärmeverbraucher (5) dem Wärmekreislauf (4) Wärme zur Erzeugung von Kälte entnehmen.

4. Verfahren nach Anspruch 3, **dadurch gekennzeichnet, dass** die Wärmeverbraucher (5) dem Wärmekreislauf (4) Wärme entnehmen und Kälte im Absorbtionsverfahren oder im Adsorbtionsverfahren erzeugen.

5. Verfahren nach einem der vorhergehenden Ansprüche, **dadurch gekennzeichnet, dass** der Wärmeverbraucher (5) zunächst von dem Energieerzeuger (1) über eine Datenübertragungseinrichtung (7) zu einem Zeitpunkt t₁ ein Steuersignal zur Wärmeverbrauchsreduzierung erhält,
dass anschließend der Wärmeverbrauch des Wärmeverbrauchers (5) unabhängig von dessen zu diesem Zeitpunkt tatsächlichem Wärmebedarf für eine bestimmte Zeit reduziert wird und
dass anschließend der Wärmeverbrauch des Wärmeverbrauchers (5) für eine bestimmte Zeitspanne Δₜ erhöht wird.

6. Verfahren nach einem der vorhergehenden Ansprüche, **dadurch gekennzeichnet, dass** die bestimmte Zeitspanne Δₜ erhöhter Wärmeentnahme höchstens zwei Stunden beträgt.

7. Verfahren nach einem der vorhergehenden Ansprüche, **dadurch gekennzeichnet, dass** innerhalb der Zeitspanne Δₜ der Wärmeverbraucher (5) dem Wärmekreislauf (4) eine maximal mögliche Wärmemenge entnimmt.

8. Verfahren nach Anspruch 2, **dadurch gekennzeichnet, dass** der Zeitpunkt t₂ maximal 30 Minuten vor dem erwarteten Spitzenbedarf an elektrischem Strom (3) liegt.

## Claims

1. Method for increasing energy generated by an energy generator (1) by combined heat and power generation in a certain time period Δₜ, **characterised in, that** at least one heat consumer (5) with time variable heat consumption connected to a heat circuit (4) of the energy generator (1) receives a control signal for raising the heat consumption from the energy generator (1) via a data transmission device (7) at a specific time t₂ and that subsequently the heat consumption of said at least one heat consumer (5) is raised for the certain time period Δₜ regardless of its actual heat demand at that time.

2. Method according to claim 1, **characterised in, that** the control signal for raising the heat consumption of the heat consumer (5) for the time period Δₜ is sent by the energy generator (1) at a specific time t₂ before an expected peak demand of an electric current (3) to be supplied by the energy generator (1), whereby the time period Δₜ ends at a time after arriving at the peak demand of electric current (3).

3. Method according to one of the preceding claims, **characterised in, that** the heat consumers (5) take out heat from the heat circuit (4) for generating cooling energy.

4. Method according to claim 3, **characterised in, that** the heat consumers (5) take out heat from the heat circuit (4) and generate cooling energy by absorption or by adsorption.

5. Method according to one of the preceding claims, **characterised in, that** the heat consumer (5) initially receives a control signal for reducing the heat consumption from the energy generator (1) via a data transmission device (7) at a specific time t₁,
that subsequently the heat demand of the heat consumer (5) is reduced for a certain time period regardless of its actual heat demand at that time and that subsequently the heat consumption of the heat consumer (5) is raised for a certain time period Δₜ.

6. Method according to one of the preceding claims, **characterised in, that** the certain time period At of raised heat consumption lasts for at most two hours.

7. Method according to one of the preceding claims, **characterised in, that** during the time period Δₜ the heat consumer (5) takes a maximum possible heat quantity from the heat circuit (4).

8. Method according to claim 2, **characterised in, that** the time t₂ comes at most 30 minutes before the expected peak demand of electric current (3).

## Revendications

1. Procédé pour accroître l'énergie électrique produite par un générateur de courant (1) par couplage force-chaleur dans un intervalle de tempos défini Δₜ, **caractérisé en ce qu'**au moins un récepteur de chaleur (5) à consommation de chaleur temporellement variable, raccordé à un circuit de chaleur (4) du générateur de courant (1), reçoit du générateur de courant (1) à un moment défini t₂ un signal de commande pour une élévation de consommation de chaleur via un dispositif de transmission de données (7), et **en ce que** la consommation de chaleur d'au moins un récepteur de chaleur (5) est ensuite élevée indépendamment de son besoin de chaleur effectif à ce moment, pour l'intervalle de temps Δₜ défini.

2. Procédé selon la revendication 1, **caractérisé en ce que** le signal de commande pour l'élévation de consommation de chaleur du récepteur de chaleur (5) pendant l'intervalle temporel Δₜ est délivré par le générateur de courant (1) à un moment défini t₂ avant un besoin de pointe attendu d'un courant électrique (3) à fournir par le générateur de courant (1), l'intervalle temporel Δₜ se terminant à un moment suivant l'obtention du besoin de pointe en courant électrique (3).

3. Procédé selon l'une des revendications précédentes, **caractérisé en ce que** les récepteurs de chaleur (5) prélèvent de la chaleur pour la génération de froid au circuit de chaleur (4).

4. Procédé selon la revendication 3, **caractérisé en ce que** les récepteurs de chaleur (5) prélèvent de la chaleur (4) au circuit de chaleur (4) et génèrent du froid par processus d'absorption ou par processus d'adsorption.

5. Procédé selon l'une des revendications précédentes, **caractérisé en ce que** le récepteur de chaleur (5) reçoit d'abord du générateur de courant (1) à un moment t₁ un signal de commande pour la diminution de la consommation de chaleur via un dispositif de transmission de données (7),
**en ce que** la consommation de chaleur du récepteur de chaleur (5) est ensuite diminuée pour un temps défini indépendamment de son besoin de chaleur effectif à ce moment,
et **en ce que** la consommation de chaleur du récepteur de chaleur (5) est ensuite élevée pour l'intervalle de temps Δₜ défini.

6. Procédé selon l'une des revendications précédentes, **caractérisé en ce que** l'intervalle de temps Δₜ défini pour le prélèvement accru de chaleur est d'au moins deux heures.

7. Procédé selon l'une des revendications précédentes, **caractérisé en ce qu'**à l'intérieur de l'intervalle de temps Δₜ défini, le récepteur de chaleur (5) prélève au circuit de chaleur (4) le débit de chaleur maximum possible.

8. Procédé selon la revendication 2, **caractérisé en ce que** le moment t₂ précède au maximum de 30 minutes le besoin de pointe attendu en courant électrique (3).
